# EUROPEAN PATENT APPLICATION

(11) **EP 4 037 079 A1**
(43) Date of publication of application: **03.08.2022**
(21) Application number: 21847325.4
(22) Date of filing: 30.04.2021
(51) Int. Cl.: H01M 50/20, H01M 10/42, H01M 10/48

(54) **BATTERY MODULE, BATTERY MODULE SYSTEM, AND BATTERY PACK COMPRISING BATTERY MODULE**

(30) Priority: 22.07.2020 KR 20200090887
(71) Applicant: LG Energy Solution, Ltd., Seoul 07335 (KR)
(72) Inventor: KIM, Dong Wook, Daejeon 34122 (KR)
(74) Representative: Plasseraud IP
(86) International application number: PCT/KR2021/005511
(87) International publication number: WO 2022/019444

(57) **Abstract**

A battery module capable of maintaining constant surface pressure of battery cells even if a swelling occurs in the battery cells accommodated in the battery module; a battery module system; and a battery pack including the battery module are provided.

## Description

### [Technical Field]

The present invention relates to a battery module, a battery module system, and a battery pack including the battery module.

This application claims the benefit of priority based on Korean Patent Application No. 10-2020-0090887, filed on July 22, 2020, and the entire contents of the Korean patent application are incorporated herein by reference.

### [Background Technology]

In recent years, as the price of energy sources increases due to the depletion of fossil fuels and the interest of environmental pollution is amplified, the demand for environmentally friendly alternative energy sources has become an indispensable factor for future life. As such, various researches on power generation technologies such as nuclear power, solar power, wind power, and tidal power have been continued, and electric power storage devices for more efficient use of such generated energy have also been attracting much attention.

In particular, with the development of technology and demand for mobile devices, the demand for batteries as energy sources is rapidly increasing, and accordingly, a lot of researches on batteries capable of meeting various demands have been conducted.

Typically, in terms of the shape of the battery, there is a high demand for a prismatic secondary battery and a pouch-type secondary battery that can be applied to products such as mobile phones with a small thickness. In terms of materials, there is a high demand for lithium secondary batteries such as lithium ion batteries and lithium ion polymer batteries having advantages such as high energy density, discharge voltage, and output stability.

Such a secondary battery is formed in a structure such that an electrode assembly including a positive electrode, a negative electrode, and a separator disposed therebetween is built in a battery case, and positive and negative electrode tabs are welded to two electrode leads and are sealed to be exposed to the outside of the battery case. The electrode tab is electrically connected to the external device through contact with the external device, and the secondary battery supplies power to the external device through the electrode tab or receives power from the external device.

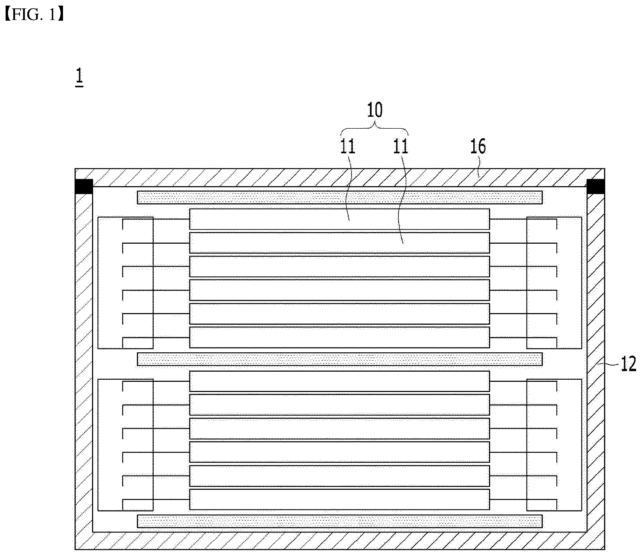

FIG. 1 is a cross-sectional view of a conventional battery module. As shown in FIG. 1, the conventional battery module includes a battery cell stack inside a case. Meanwhile, gas may be generated inside the battery cell in the charge/discharge process, and a swelling phenomenon, in which the battery cell is expanded or shrunk, may repeatedly occur due to the generated gas. In particular, there was a problem that as the thickness of the battery cell increased by the repetition of charge/discharge of the battery cell, the case of the battery module was deformed.

As such, there is a need for a technology for preventing the deformation of the case by maintaining the swelling force according to the charge/discharge of the battery cell constant.

### [Disclosure]

### [Technical Problem]

In order to solve the problem of the conventional technology, the present disclosure provides a battery module for maintaining the surface pressure of battery cells constant, a battery module system, and a battery pack including the battery module.

The present disclosure provides a battery module for maintaining the surface pressure of battery cells constant. In one example, a battery module according to the present disclosure includes: a module case; a battery cell stack generated by laminating n (n is an integer equal to or greater than 2) battery cells, the battery cell stack being accommodated in the module case; a tube into which a fluid is flowed, the tube stacked on one surface of the battery cell stack and positioned between the battery cell stack and the module case; a fluid supply device connected to the tube and supplying the fluid to the tube; and a fluid control valve connected to the tube and to the fluid supply device, and controlling inflow of the fluid into the tube and maintain a constant surface pressure of battery cells accommodated in the module case.

In one example, the battery module according to the present disclosure further includes a pressure sensor connected to the tube and to the fluid control valve, and measuring a pressure of the tube into which the fluid has been flowed.

In one embodiment, the tube may be made of a soft or elastic material, and the fluid supply device may comprise a fluid pump or a pressure head. Further, the fluid being flowed into the tube may be in a liquid or gel state.

In another embodiment, the battery module may further include a pressing plate stacked on one surface of the battery cell stack. In a specific example, one or more stopper blocks are provided between the pressing plate and one surface of the module case, thereby limiting movement of the pressing plate in the stacking direction of the battery cell stack.

In one embodiment, a compression pad is disposed between battery cells in the battery cell stack. At this time, the compression pad is disposed between 3 to 10 battery cells.

In one embodiment, the battery cell stack further includes a bus bar assembly for electrically connecting m (m is an integer equal to or greater than 2) battery cells.

Further, the present disclosure provides a battery module system for maintaining the surface pressure of battery cells constant. In one embodiment, battery module system includes: a module case unit accommodating a battery cell stack; a tube-shaped surface pressure maintaining unit into which a fluid is flowed, the tube-shaped surface pressure maintaining unit stacked on one surface of the battery cell stack and positioned between the battery cell stack and the module case unit; a fluid supply unit connected to the surface pressure maintaining unit and supplying a fluid to the surface pressure maintaining unit; a pressure sensing unit connected to the surface pressure maintaining unit and to the fluid supply unit and measuring a pressure of the surface pressure maintaining unit; and a fluid control unit connected to the pressure sensing unit and to the fluid supply unit and controlling inflow of the fluid into the surface pressure maintaining unit according to the pressure measured in the pressure sensing unit.

In one embodiment, the battery module system according to the present disclosure further includes a data processing unit receiving pressure data of the surface pressure maintaining unit, which has been measured in the pressure sensing unit, and determine whether to operate the fluid supply unit and the fluid control unit.

In one embodiment, the data processing unit decides to operate the fluid supply unit and the fluid control unit if the pressure data of the surface pressure maintaining unit, which has been measured in the pressure sensing unit, is lower than a predetermined range. In a specific example, the fluid supply unit and the fluid control unit may supply a fluid into the surface pressure maintaining unit until the pressure of the surface pressure maintaining unit reaches the predetermined range.

In another embodiment, the data processing unit decides to operate the fluid supply unit and the fluid control unit if the pressure data of the surface pressure maintaining unit, which has been measured in the pressure sensing unit, is higher than a predetermined range. In a specific example, the fluid supply unit and the fluid control unit may discharge the fluid in the surface pressure maintaining unit until the pressure of the surface pressure maintaining unit reaches the predetermined range.

In further another embodiment, , if the pressure data of the surface pressure maintaining unit, which has been measured in the pressure sensing unit, is included in a predetermined range, the data processing unit may stop operation of the fluid supply unit and the fluid control unit.

Further, the present disclosure provides a battery pack including the above-described battery module.

### [Advantageous Effects]

According to a battery module, a battery module system and a battery pack including the battery module of the present disclosure, even if a swelling phenomenon occurs in a battery cell accommodated in a battery module, the surface pressure of the battery cell may be maintained constant.

### [Brief Description of the Drawings]

FIG. 1 is a cross-sectional view of a conventional battery module.
FIGS. 2 to 4 are schematic diagrams of a battery module according to exemplary embodiments of the present disclosure.
FIG. 5 is a block diagram showing a battery module system configuration according to one exemplary embodiment of the present disclosure.
FIG. 6 is a block diagram showing a battery module system configuration according to one exemplary embodiment of the present disclosure.

### [Detailed Description]

Hereinafter, the present disclosure will be described in detail with reference to the drawings. The terms and words used in the present specification and claims should not be construed as limited to ordinary or dictionary terms and the inventor may properly define the concept of the terms in order to best describe its disclosure. The terms and words should be construed as meaning and concept consistent with the technical idea of the present disclosure.

The present disclosure relates to a battery module, a battery module system, and a battery pack including the battery module. Further, a battery module according to the present disclosure includes: a module case; a battery cell stack generated by laminating n (n is an integer equal to or greater than 2) battery cells, the battery cell stack being accommodated in the module case; a tube into which a fluid is flowed, the tube stacked on one surface of the battery cell stack and positioned between the battery cell stack and the module case; a fluid supply device connected to the tube and supplying the fluid to the tube; and a fluid control valve connected to the tube and to the fluid supply device, and controlling inflow of the fluid into the tube and maintaining a constant surface pressure of battery cells accommodated in the module case.

Generally, gas may be generated inside the battery cell in the charge/discharge process, and as such, a swelling phenomenon, in which the battery cell is expanded or shrunk, may repeatedly occur. In particular, there was a problem that as the thickness of the battery cell increased by the repetition of charge/discharge of the battery cell, the case of the battery module was deformed. Therefore, the present disclosure provides a battery pack including a battery module, a battery module system, and a battery module capable of keeping the surface pressure of the battery cell constant. Specifically, the present disclosure provides a battery module capable of allowing expansion displacement by swelling while compressing n battery cells accommodated in the battery module with a constant force by laminating the tube, into which a fluid flows, on the battery cell stack.

In the present disclosure, the tube is stacked on one surface of the battery cell stack, and is a structure for supporting the battery cell stack and the module case. The tube may have a flat form to support one surface of the battery cell stack and may cover the front surface of the battery cell. In particular, a fluid may flow into the tube, and the surface pressure of the battery cells accommodated in the module case may be maintained constant by controlling the inflow of the fluid. Namely, in the battery module of the present disclosure, the tube presses the battery cells accommodated in the module case by a constant load. Even if a battery cell swelling phenomenon occurs in the battery cells, the surface pressure of the battery cells may be maintained constant.

Through various and repeated experiments observations, the inventors of the present disclosure have found that by laminating a tube, into which a fluid flows, on a battery cell stack, the surface pressure of the battery cells is maintained constant even when a swelling phenomenon occurs in the battery cells.

In one embodiment, the module case of the present disclosure includes a storage space in which a battery cell stack is accommodated inside the module case as a housing for accommodating a battery cell stack. Meanwhile, when the battery cell stack is accommodated in a case, the battery cell stack may be accommodated such that the stacked surface of the battery cell stack may be parallel to the bottom surface of the case. In another example, one surface of the module case may be opened, and a cover may be welded on one surface of the module case. Herein, one surface of a module case means one wall of a module case and means a module case wall located in a lamination direction of a battery cell stack.

In one example, the battery cell stack comprises n (n is an integer equal to or greater than 2) battery cells. The number (n) of stacked battery cells may be changed depending on the number of battery cells which need electric connection or depending on the capacity of the battery module. For example, the number (n) of stacked battery cells of the battery cell stack is in a range of 2 to 100, 2 to 50, 2 to 10, or 3 to 7.

On the other hand, if the battery cell is a secondary battery capable of charging and discharging, it is not particularly limited. In a specific example, each battery cell constituting the battery cell stack is a pouch type unit cell, and an electrode assembly of a positive electrode/separator/negative electrode structure is built in a laminate sheet exterior material in a manner that is connected to electrode leads formed outside the exterior material. The electrode leads may be drawn to the outside of the sheet and may be extended in the same or opposite direction to each other.

Further, the battery cell stack further includes a bus bar assembly which mutually, electrically connects n battery cells. In one example, the bus bar assembly includes a bus bar or an insulating bar, and respective battery cells are electrically connected by such bars. Meanwhile, the battery cell stack may electrically connect battery cells in series or in parallel according to the positions where the bus bar and the insulating bar are disposed in the bus bar assembly. The bus bar assembly may be a conventional bus bar assembly.

In one embodiment, the tube is stacked on one surface of the battery cell stack, as described above, and is a structure for supporting the battery cell stack and the module case.

The tube is made of a soft or elastic material, and the tube may be a structure formed of a rubber material. The tube may be made of an elastic rubber material, which can increase the pressure dispersing effect between the battery cells. Furthermore, the tube may be a flat type tube so that the tube may be stacked on one surface of the battery cells.

Furthermore, the fluid may be a fluid in a liquid or gel state, which flows into the tube. For example, the fluid is cooling water or water. By filling the cooling water or water in the tube, the cooling effect for the battery cell can be implemented. In addition, when the fluid is a hydrogel, it is advantageous for the dispersion of the stress concentrated in a specific region and maintenance of a thermal equilibrium, and the weight increase of the battery module can be minimized. On the contrary, gas may be used as a fluid, but in the case that the gas is used as the fluid, the temperature of the battery cell may be raised by the heated gas.

In one embodiment, the battery module according to the present disclosure includes a fluid supply device and a fluid control valve. Specifically, the fluid supply device may be a conventional fluid pump as a device for supplying a fluid into the tube, or may be a device using a pressure head.

In another embodiment, the fluid supply device using the pressure head includes a fluid supply pipe to be fluidly connected to the tube. At this time, the fluid supply pipe is located at a position higher than that of the fluid supply region of the tube and has a structure that is perpendicular to the ground. Then, the height of the fluid in the fluid supply pipe can be adjusted to determine the amount of fluid to be flown into the tube, thereby controlling the pressure of the tube. In this case, the fluid supply device may apply fluid pressure to the tube without a separate power source.

Further, the fluid control valve may be a conventional valve and may be connected to the fluid supply device and the tube and control the inflow of the fluid into the tube, to thereby maintain the surface pressure of the battery cells accommodated in the module case constant. For example, the valve may receive a signal of the pressure sensor and operate according to the signal, and may open or close the flow path. Specifically, if the pressure of the tube of the fluid control valve exceeds or is less than a reference value range, the flow path may be opened to supply or discharge the fluid, and if the pressure of the tube is within the reference value range, the flow path may be closed.

In addition, the battery module according to the present disclosure includes a pressure sensor. The pressure sensor may be connected to the tube and the fluid control valve and measure the pressure change of the tube into which the fluid flows. Further, whether to operate the fluid supply device and the fluid control valve is determined based on the pressure measured in the pressure sensor.

In one example, a fluid is supplied to a tube stacked on one surface of the battery cell stack using a fluid supply device. Specifically, by supplying a fluid to the tube, it is possible to raise the pressure of the tube, and a desired amount of initial pressure may be applied. Meanwhile, when a swelling phenomenon occurs in the battery cells in the battery module, the pressure applied to the tube increases. In this case, the fluid supply device and the fluid control valve may be operated according to the pressure value of the tube, the fluid control valve may be opened until the pressure inside the tube reaches a reference value, and the fluid supply device may discharge the fluid in the tube to the outside of the tube.

Namely, the battery module according to the present disclosure may control the inflow of the fluid inside the tube supporting the battery cell stack. As such, the battery cell, which is accommodated in the battery module, may maintain a constant surface pressure.

In one embodiment, the battery module according to the present disclosure may further include a pressing plate stacked on one surface of the battery cell stack. The pressing plate is stacked on one surface of the battery cell stack and may limit the movement at the upper portion of the battery cell stack. The pressing plate may be plate-shaped and may be made of an electrically insulating material.

In another embodiment, the battery module according to the present disclosure may include one or more stopper blocks between the pressing plate and one surface of the module case. The stopper block limits the movement in the lamination direction of the pressing plate and is attached on the inner surface of the module case or the upper portion of the pressing plate.

In a specific example, if a swelling phenomenon of the battery cell is stronger than a designed load limit, the pressing plate moves in the lamination direction of the battery cell. Meanwhile, there is a predetermined space between one surface of the module case and the pressing plate. If the swelling displacement of the battery cell goes beyond the predetermined space, the movement in the lamination direction of the pressing plate may be limited by the stopper block. The stopper block may be made of any material if it is a material for limiting the movement of the pressing plate. For example, it may be an insulating plastic.

In one embodiment, the battery module according to the present disclosure includes a compression pad. In a specific example, the compression pad is disposed between 3 to 10 battery cells. Specifically, the compression pad bodies are disposed at regular intervals between respective 5 to 10 or 5 to 8 battery cells. If the arrangement interval of the compression pad bodies becomes small, it is advantageous in terms of pressure and thermal equilibrium, but the capacity of the battery module may be deteriorated. The arrangement interval of the compression pad bodies is determined in consideration of the maintenance of the pressure and thermal equilibrium in the battery module and economic efficiency. The compression pad may be made of a polyurethane series material, and when thickness is modified by the swelling phenomenon of the battery cell, the change in the battery cell by the external impact may be absorbed.

Further, the present disclosure provides a battery module system for maintaining the surface pressure of battery cells constant. In one embodiment, battery module system includes: a module case unit accommodating a battery cell stack; a tube-shaped surface pressure maintaining unit into which a fluid is flowed, the tube-shaped surface pressure maintaining unit stacked on one surface of the battery cell stack and positioned between the battery cell stack and the module case unit; a fluid supply unit connected to the surface pressure maintaining unit and supplying a fluid to the surface pressure maintaining unit; a pressure sensing unit connected to the surface pressure maintaining unit and to the fluid supply unit and measuring a pressure of the surface pressure maintaining unit; and a fluid control unit connected to the pressure sensing unit and to the fluid supply unit and controlling inflow of a fluid into the surface pressure maintaining unit according to the pressure measured in the pressure sensing unit.

Further, the battery module system according to the present disclosure further includes a data processing unit which receives pressure data of the surface pressure maintaining unit, which has been measured in the pressure sensing unit, and determines whether to operate the fluid supply unit and the fluid control unit.

Specifically, the data processing unit receives the measurement data of the surface pressure maintaining unit measured in the pressure sensing unit. Further, received pressure data is compared with reference data, and it is determined whether the measurement data is included in the range of the reference data.

At this time, if the measurement data is not included in the range of the reference data, the data processing unit transmits signals so that the operation of the fluid supply unit and the fluid control unit may be performed. The fluid supply unit is a fluid supply device, and the fluid control unit is a fluid control valve.

In one example, if the pressure data of the surface pressure maintaining unit measured in the pressure sensing unit is lower than a predetermined range, the data processing unit receives measurement data obtained by measurement of the pressure sensing unit and determines the operation of the fluid supply unit and the fluid control unit.

Further, the fluid supply unit and the fluid control unit are operated to supply a fluid to the inside of the surface pressure maintaining unit. At this time, the fluid supply unit and the fluid control unit supplies the fluid into the surface pressure maintaining unit until the pressure of the surface pressure maintaining unit reaches the predetermined range. Namely, the battery module system according to the present disclosure may maintain the swelling force according to the charge/discharge of the battery cell constant by supplying a fluid into the surface pressure maintaining unit and pressing the battery cell stack 410, thereby preventing deformation of a case unit.

In another example, if the pressure data of the surface pressure maintaining unit measured in the pressure sensing unit is higher than a predetermined range, the data processing unit receives measurement data obtained by measurement of the pressure sensing unit and determines the operation of the fluid supply unit and the fluid control unit.

Further, the fluid supply unit and the fluid control unit are operated to discharge a fluid in the surface pressure maintaining unit. At this time, the fluid supply unit and the fluid control unit discharges the fluid in the surface pressure maintaining unit until the pressure of the surface pressure maintaining unit reaches the predetermined range. Namely, the battery module system according to the present disclosure may discharge a fluid into the surface pressure maintaining unit, thereby maintaining the swelling force according to charge/discharge of the battery cell constant.

In another example, if the pressure data of the surface pressure maintaining unit measured in the pressure sensing unit is within a predetermined range, the data processing unit receives measured pressure data of the pressure sensing unit and sends a signal to stop operation of the fluid supply unit and the fluid control unit.

In a specific example, the data processing unit receives measurement data of the pressure sensing unit and determines whether the measurement data is within the reference value range. Then, when the measurement data is within the reference range, the operation of the fluid supply unit and the fluid control unit is stopped.

As such, the swelling force according to charge/discharge of the battery cell may be maintained constant, thereby preventing deformation of the case unit, etc.

Further, the present disclosure provides a battery pack including a battery module described above.

In a specific example, the battery pack according to the present disclosure includes one or more battery modules.

At this time, each individual battery module includes a battery cell stack accommodated in a module case, and a tube, into which a fluid flows, on one surface of the battery cell stack. In addition, the battery module includes a fluid supply device (not shown) for supplying fluid to the tube, and a fluid control valve for controlling the inflow of the fluid, and a pressure sensor for measuring the pressure of the tube.

The tube may be stacked on the end portion of the battery cell stack, and the tube included in each battery module may be fluidly connected to the tube of a neighboring battery module. Meanwhile, the pressure sensor and the fluid control valve are connected to each battery module, and the swelling level of the battery cells accommodated in each battery module may be indirectly recognized.

Meanwhile, when a danger such as a fire is sensed, the fluid in the tube may be supplied as the cooling fluid to be utilized to block heat transfer.

The battery pack is applicable to various types of energy storage devices and power sources. For example, the energy storage device is an Energy Storage System (ESS) that stores a large amount of electrical energy. In addition, the power source is applicable to the power source of a moving means such as a vehicle. The vehicle refers to any type of vehicle which uses secondary batteries as its auxiliary power source or main power source. Specifically, the vehicle includes a hybrid (HEV), a plug-in hybrid (PHEV), or a pure electric car (BEV, EV), and the like.

Hereinafter, the present disclosure will be described in more detail through drawings and examples. As the inventive concept allows for various changes and numerous embodiments, particular embodiments will be illustrated in the drawings and described in detail in the text. However, this is not intended to limit the present disclosure to the specific form disclosed, and it should be understood to include all changes, equivalents, and substitutes included in the spirit and scope of the present disclosure.

### First embodiment

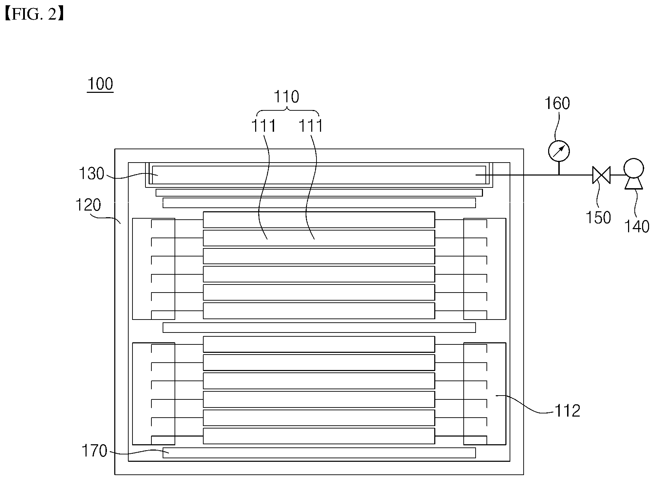

FIG. 2 is a schematic diagram of a battery module according to one exemplary embodiment of the present disclosure.

Referring to FIG. 2, a battery module 100 according to the present disclosure includes: a battery cell stack 110 generated by laminating n (n is an integer equal to or greater than 2) battery cells 111, a module case 120 accommodating the battery cell stack 110; a tube 130 into which a fluid is flowed, the tube stacked on one surface of the battery cell stack 110 and positioned between the battery cell stack 110 and the module case 120; a fluid supply device 140 connected to the tube 130 and supplying a fluid to the tube 130; and a fluid control valve 150 connected to the tube and to the fluid supply device 140, and controlling inflow of the fluid into the tube 130and maintaining a constant surface pressure of battery cells 111 accommodated in the module case 120.

In one embodiment, the tube 130 is made of a soft or elastic material. Specifically, the tube 130 may be made of a rubber material. The tube 130 may be made of an elastic rubber material, which can increase the pressure dispersing effect between the battery cells. Furthermore, the tube 130 may be a flat type tube so that the tube 130 may be stacked on one surface of the battery cells 111.

Furthermore, the fluid may be a fluid in a liquid or gel state, which flows into the tube 130.

In addition, the battery cell stack 110 has a structure in which a compression pad 170 is interposed between the battery cells 111. Specifically, compression pads 170 are disposed such that 3 to 10 battery cells 111 are between each of the compression pads. The compression pad 170 may be made of a polyurethane series material. In particular, it is possible to absorb the thickness of the battery cell when the thickness is changed by the swelling phenomenon of the battery cell 111 by including a compression pad 170 between the battery cells 111.

In one embodiment, the battery module 100 according to the present disclosure includes a pressure sensor 160. The pressure sensor 160 may be connected to the tube 130 and the fluid control valve 150 and measure the pressure change of the tube 130 into which the fluid flows.

Further, whether to operate the fluid supply device 140 and the fluid control valve 150 is determined based on the pressure measured in the pressure sensor 160. At this time, the fluid supply device 140 may be a fluid pump.

In one embodiment, the fluid supply device 140 supplies a fluid to the tube stacked on one surface of the battery cell stack 110. Specifically, by supplying a fluid to the tube, it is possible to raise the pressure of the tube 130, and a desired amount of initial pressure may be applied. Meanwhile, when a swelling phenomenon occurs in the battery cells 111 in the battery module 100, the pressure applied to the tube 130 increases. In such a case, the fluid supply device 140 and the fluid control valve 150 may be operated according to the pressure value of the tube 130, the fluid control valve 150 may be opened until the pressure in the tube 130 reaches a reference value, and the fluid supply device 140 may discharge the fluid in the tube 130 to the outside of the tube 130.

Namely, the battery module 100 according to the present disclosure may control the amount of inflow of the fluid into the tube 130 supporting the battery cell stack 110. As such, the battery cell 111, which is accommodated in the battery module 100, may maintain a constant surface pressure.

### Second embodiment

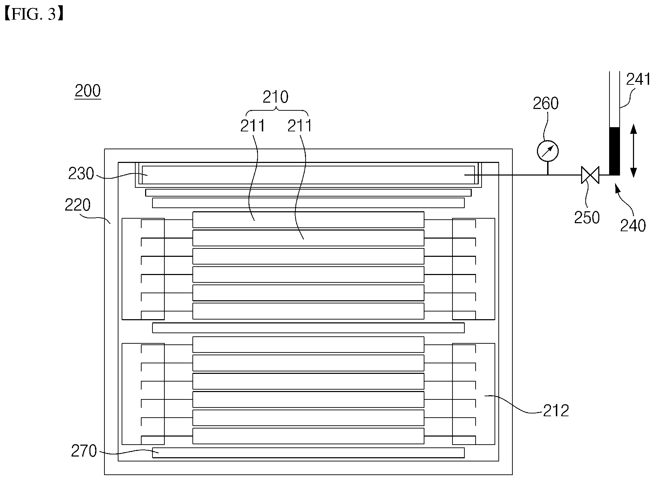

FIG. 3 is a schematic diagram showing a battery module according to another exemplary embodiment of the present disclosure.

Referring to FIG. 3, a battery module 200 according to the present disclosure includes: a battery cell stack 210 generated by laminating n (n is an integer equal to or greater than 2) battery cells 211, a module case 220 accommodating the battery cell stack 210; a tube 230 into which a fluid is flowed, the tube stacked on one surface of the battery cell stack 210 and positioned between the battery cell stack 210 and the module case 220; a fluid supply device 240 connected to the tube 230 and supplying the fluid to the tube 230; and a fluid control valve 250 connected to the tube and to the fluid supply device 240, and controlling inflow of the fluid into the tube 230 and maintaining a constant surface pressure of battery cells 211 accommodated in the module case 220.

In addition, the battery module 200 according to the present disclosure includes a pressure sensor 260. The pressure sensor 260 may be connected to the tube 230 and the fluid control valve 250 and measure the pressure change of the tube 230 into which the fluid flows.

In another embodiment, the fluid supply device 240 comprises a pressure head. Specifically, the fluid supply device 240 includes a fluid supply pipe 241 which is fluidly connected to the tube 230. The fluid supply pipe 241 is located at a position higher than that of the fluid supply region of the tube 230 and has a structure that is perpendicular to the ground. Then, the height of the fluid in the fluid supply pipe 241 can be adjusted to determine the amount of fluid to be flown into the tube 230, thereby controlling the pressure of the tube 230. In this case, the fluid supply device 240 may apply fluid pressure to the tube 230 without a separate power source.

Since each component has been described above, the detailed description of each component will be omitted here.

### Third embodiment

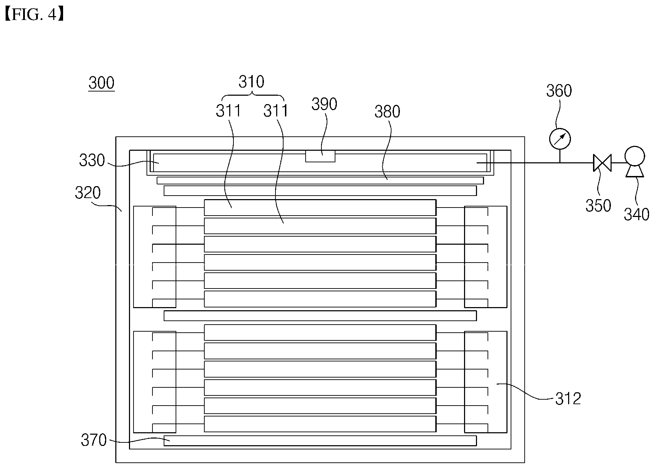

FIG. 4 is a schematic diagram showing a battery module according to further another exemplary embodiment of the present disclosure.

Referring to FIG. 4, a battery module 300 according to the present disclosure includes: a battery cell stack 310 generated by laminating n (n is an integer equal to or greater than 2) battery cells 311, a module case 320 accommodating the battery cell stack 310; a tube 330 into which a fluid is flowed, the tube stacked on one surface of the battery cell stack 310 and positioned between the battery cell stack 310 and the module case 320; a fluid supply device 340 connected to the tube 330 and supplying the fluid to the tube 330; and a fluid control valve 350 connected to the tube and to the fluid supply device 340, and controlling inflow of the fluid into the tube 330and maintaining a constant surface pressure of battery cells 311 accommodated in the module case 320.

In addition, the battery module 300 according to the present disclosure includes a pressure sensor 360. The pressure sensor 360 may be connected to the tube 330 and the fluid control valve 350 and measure the pressure change of the tube 330 into which the fluid flows.

Further, the battery module 300 according to the present disclosure further includes a pressing plate 380 stacked on the upper end of the battery cell stack 310. One or more stopper blocks 390 are positioned between the pressing plate 380 and one surface of the module case 320. In FIG. 4, it is shown that one stopper block 390 is provided, but the present disclosure is not limited thereto.

The stopper block 390 limits the movement of the pressing plate 380 in the stacking direction and is attached to the inner surface of the module case 320 and the upper portion of the pressing plate 380.

Specifically, if the swelling phenomenon of the battery cells 311 is stronger than a designed load limit, the thickness of each battery cell 311 increases, and the pressing plate 380 moves in a lamination direction of the battery cell stack 310. Meanwhile, there is a predetermined space between one surface of the module case 320 and the pressing plate 380. If the swelling displacement of the battery cell 311 goes beyond the predetermined space, the movement in the lamination direction of the pressing plate 280 may be limited by the stopper block 390.

Since each component has been described above, the detailed description of each component will be omitted here.

### Fourth embodiment

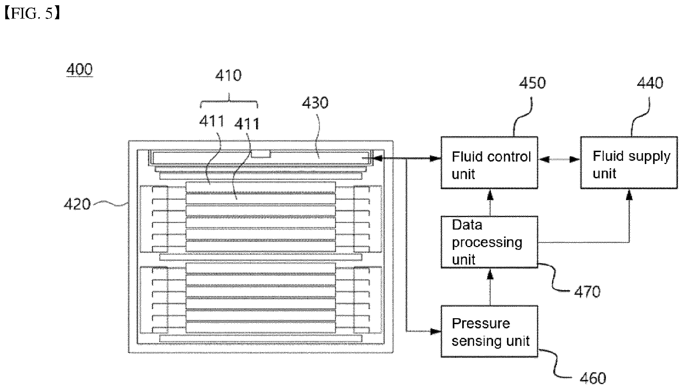

FIG. 5 is a block diagram showing each component of a battery module system according to the present disclosure.

Referring to FIG. 5, a battery module system 400 according to the present disclosure includes: a module case unit 420 accommodating a battery cell stack 410; a tube-shaped surface pressure maintaining unit 430 into which a fluid is flowed, the tube-shaped surface pressure maintaining unit stacked on one surface of the battery cell stack 410 and positioned between the battery cell stack 410 and the module case unit 420; a fluid supply unit 440 connected to the surface pressure maintaining unit 430 and supplying the fluid to the surface pressure maintaining unit 430; a pressure sensing unit 460 connected to the surface pressure maintaining unit 430 and to the fluid supply unit 440 and measuring a pressure of the surface pressure maintaining unit 430; and a fluid control unit 450 connected to the pressure sensing unit 460 and to the fluid supply unit 440 and controlling inflow of a fluid into the surface pressure maintaining unit 430 according to the pressure measured in the pressure sensing unit 460.

Further, the battery module system 400 according to the present disclosure further includes a data processing unit 470 which receives pressure data of the surface pressure maintaining unit 430, which has been measured in the pressure sensing unit 460, and determines whether to operate the fluid supply unit 440 and the fluid control unit 450.

Specifically, the data processing unit 470 receives measurement data of the surface pressure maintaining unit 430, obtained by measurement in the pressure sensing unit 460. Further, received pressure data is compared with reference data, and it is determined whether the measurement data is included in the range of the reference data.

At this time, if the measurement data is not included in the range of the reference data, the data processing unit 470 transmits signals so that the operation of the fluid supply unit 440 and the fluid control unit 450 may be performed. The fluid supply unit 440 is a fluid supply device, and the fluid control unit 450 is a fluid control valve.

In one embodiment, if the pressure data of the surface pressure maintaining unit 430, which has been measured in the pressure sensing unit 460, is lower than a predetermined range, the data processing unit 470 receives measurement data by the pressure sensing unit 460 and decides to operate the fluid supply unit 440 and the fluid control unit 450.

Then, the fluid supply unit 440 and the fluid control unit 450 are operated to supply the fluid into the surface pressure maintaining unit 430. At this time, the fluid supply unit 440 and the fluid control unit 450 may supply a fluid into the surface pressure maintaining unit 430 until the pressure of the surface pressure maintaining unit 430 reaches the predetermined range. Namely, the battery module system according to the present disclosure may maintain the swelling force according to the charge/discharge of the battery cell 411 constant by supplying a fluid into the surface pressure maintaining unit 430 and pressing the battery cell stack 410, thereby preventing deformation of a case unit 420.

### Fifth embodiment

In another exemplary embodiment, when the pressure data of the surface pressure maintaining unit 430, which has been measured in the pressure sensing unit 460, is higher than a predetermined range, the data processing unit 470 receives measurement data by the pressure sensing unit 460 and decides to operate the fluid supply unit 440 and the fluid control unit 450.

Then, the fluid supply unit 440 and the fluid control unit 450 are operated to discharge the fluid in the surface pressure maintaining unit 430. At this time, the fluid supply unit 440 and the fluid control unit 450 may discharge the fluid in the surface pressure maintaining unit 430 until the pressure of the surface pressure maintaining unit 430 reaches the predetermined range. Namely, the battery module system according to the present disclosure may discharge a fluid into the surface pressure maintaining unit 430, thereby maintaining the swelling force according to charge/discharge of the battery cell 411 constant.

### Sixth embodiment

In another exemplary embodiment, if the pressure data of the surface pressure maintaining unit 430, which has been measured in the pressure sensing unit 460, is within a predetermined range, the data processing unit 470 receives measured pressure information by the pressure sensing unit 460 and sends a signal to stop the operation of the fluid supply unit 440 and the fluid control unit 450.

In a specific example, the data processing unit 470 receives measurement data of the pressure sensing unit 460 and determines whether the measurement data is within the reference value range. Then, when the measurement data is within the reference range, the operation of the fluid supply unit 440 and the fluid control unit 450 is stopped.

As such, the swelling force according to charge/discharge of the battery cell 411 may be maintained constant, thereby preventing deformation of the case unit 420, etc.

### Seventh embodiment

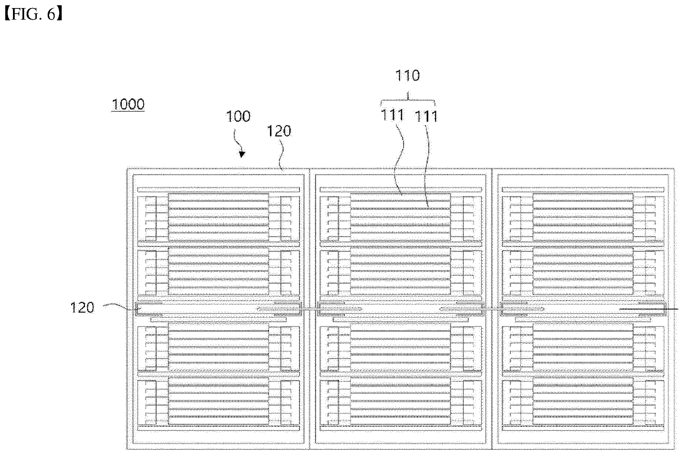

FIG. 6 is a schematic diagram of a battery pack according to the present disclosure.

Referring to FIG. 6, the battery pack according to the present disclosure includes a battery module. In a specific example, the battery pack 1000 according to the present disclosure includes one or more battery modules 100. In FIG. 6, it is illustrated that three battery modules 100 are included, but the present disclosure is not limited thereto. Although not shown in FIG. 6, the battery module 100 may be housed in the battery pack case.

At this time, each battery module 100 includes a battery cell stack 110 accommodated in a module case 120, and a tube 130, into which a fluid flows, on one surface of the battery cell stack. In addition, the battery module 100 includes a fluid supply device (not shown) for supplying fluid to the tube 130, and a fluid control valve for controlling the inflow of the fluid, and a pressure sensor for measuring the pressure of the tube 130.

The tube 130 may be stacked at the end of the battery cell stack 110, and the tube 130 included in each battery module 100 may be fluidly connected to the tube 130 of a neighboring battery module 100.

Meanwhile, the pressure sensor and the fluid control valve are connected to each battery module 100, and the swelling level of the battery cells 111 accommodated in each battery module 100 may be indirectly recognized.

Although preferred examples of the present disclosure have been described with reference to drawings, it can be understood that those skilled in the art can make various modifications and changes to the present disclosure without departing from the spirit and scope of the disclosure as set forth in the claims below.

Therefore, the technical scope of the present disclosure should not be limited to the contents described in the detailed description of the specification but should be defined by the claims.

### [Description of reference numerals]

1, 100, 200, 300: battery module
10, 110, 210, 310: battery cell stack
11, 111, 211, 311: battery cell
112, 212, 312: bus bar assembly
12, 120, 220, 320: module case
130, 230, 330: tube
140, 240, 340: fluid supply device
150, 250, 350: fluid control valve
160, 260, 360: pressure sensor
170, 270, 370: compression pad
380: pressing plate
390: stopper block
400: battery module system
410: battery cell stack
411: battery cell
420: case unit
430: surface pressure maintaining unit
440: fluid supply unit
450: fluid control unit
460: pressure sensing unit
470: data processing unit
1000: battery pack

## Claims

1. A battery module comprising:
a module case;
a battery cell stack comprising n battery cells, the battery cell stack being accommodated in the module case;
a tube into which a fluid is flowed, the tube stacked on one surface of the battery cell stack and positioned between the battery cell stack and the module case;
a fluid supply device connected to the tube and supplying the fluid to the tube; and
a fluid control valve connected to the tube and to the fluid supply device, and controlling inflow of the fluid into the tube and maintaining a constant surface pressure of the battery cells accommodated in the module case,
wherein the n is an integer equal to or greater than 2.

2. The battery module of claim 1, further comprising a pressure sensor connected to the tube and the fluid control valve, and measuring a pressure of the tube into which the fluid has been flowed.

3. A battery module of claim 1, wherein the tube is made of a soft or elastic material.

4. The battery module of claim 1, wherein the fluid supply device comprises a fluid pump or a pressure head.

5. The battery module of claim 1, wherein the fluid being flowed into the tube is in a liquid or gel state.

6. The battery module of claim 1, further comprising a pressing plate stacked on one surface of the battery cell stack, and
wherein one or more stopper blocks are provided between the pressing plate and one surface of the module case so as to limit movement of the pressing plate in a stacking direction of the battery cell stack.

7. The battery module of claim 1, wherein compression pads are disposed between battery cells in the battery cell stack such that 3 to 10 battery cells are between each of the compression pads.

8. The battery module of claim 1, wherein the battery cell stack further includes a bus bar assembly for electrically connecting m battery cells, and
wherein the m is an integer equal to or greater than 2.

9. A battery module system comprising:
a module case unit accommodating a battery cell stack;
a tube-shaped surface pressure maintaining unit into which a fluid is flowed, the tube-shaped surface pressure maintaining unit stacked on one surface of the battery cell stack and positioned between the battery cell stack and the module case unit;
a fluid supply unit connected to the surface pressure maintaining unit and supplying the fluid to the surface pressure maintaining unit;
a pressure sensing unit connected to the surface pressure maintaining unit and to the fluid supply unit and measuring a pressure of the surface pressure maintaining unit; and
a fluid control unit connected to the pressure sensing unit and to the fluid supply unit and controlling inflow of the fluid into the surface pressure maintaining unit according to the pressure measured in the pressure sensing unit.

10. The battery module system of claim 9, further including a data processing unit which receives pressure data of the surface pressure maintaining unit, which has been measured in the pressure sensing unit, and determines whether to operate the fluid supply unit and the fluid control unit.

11. The battery module system of claim 10, wherein the data processing unit determines to operate the fluid supply unit and the fluid control unit when the pressure data of the surface pressure maintaining unit, which has been measured in the pressure sensing unit, is lower than a predetermined range, and
wherein the fluid is supplied into the surface pressure maintaining unit until the pressure of the surface pressure maintaining unit reaches the predetermined range.

12. The battery module system of claim 10, wherein the data processing unit determines to operate the fluid supply unit and the fluid control unit when the pressure data of the surface pressure maintaining unit, which has been measured in the pressure sensing unit, is higher than a predetermined range, and
wherein the fluid in the surface pressure maintaining unit is discharged until the pressure of the surface pressure maintaining unit reaches the predetermined range.

13. The battery module system of claim 10, wherein the data processing unit stops operation of the fluid supply unit and the fluid control unit when the pressure data of the surface pressure maintaining unit, which has been measured in the pressure sensing unit, is included in a predetermined range.

14. A battery pack comprising the battery module according to claim 1.
